# FASCICULE DE BREVET EUROPEEN

(11) **EP 3 182 217 B1**
(45) Date de publication et mention de la délivrance du brevet: **14.11.2018**
(21) Numéro de dépôt: 15201242.3
(22) Date de dépôt: 18.12.2015
(51) Int. Cl.: G04B 17/26, G04B 13/00, G04B 1/22

(54) **MÉCANISME DE RÉGLAGE DE RAPPORT DE COUPLE ENTRE DES MOBILES D'HORLOGERIE**
MECHANISMUS ZUM EINSTELLEN DES KUPPLUNGSVERHÄLTNISSES ZWISCHEN TRIEBFEDERN EINER UHR
MECHANISM FOR ADJUSTING THE TORQUE RATIO BETWEEN TIMEPIECE WHEELS

(43) Date de publication de la demande: 21.06.2017
(73) Titulaire: MONTRES BREGUET S.A., 1344 L'Abbaye (CH)
(72) Inventeur: Junod, Benoît, 01170 Gex (FR)
(74) Mandataire: Giraud, Eric

(56) Documents cités:
- EP-A1- 2 701 013
- WO-A1-2009/152972
- WO-A2-2012/168443
- CH-A2- 707 743
- CH-A2- 708 526

## Description

### Domaine de l'invention

L'invention concerne un mécanisme variateur de couple pour le réglage de rapport de couple entre une première piste s'étendant autour d'un premier axe de pivotement, et une deuxième piste s'étendant autour d'un deuxième axe de pivotement, ladite première piste étant agencée pour être rapportée ou intégrée à un premier mobile d'horlogerie pivotant autour dudit premier axe de pivotement, et ladite deuxième piste étant agencée pour être rapportée ou intégrée à un deuxième mobile d'horlogerie pivotant autour dudit deuxième axe de pivotement.

L'invention concerne encore un mouvement d'horlogerie comportant au moins un tel mécanisme variateur de couple.

L'invention concerne encore une montre comportant au moins un tel mouvement ou/et au moins un tel mécanisme variateur de couple

L'invention concerne le domaine des mécanismes d'horlogerie, et plus particulièrement la régulation des mécanismes moteurs, et l'adaptation du rapport de couple entre deux mobiles.

### Arrière-plan de l'invention

Dans un mécanisme d'horlogerie, il est difficile d'effectuer une modulation correcte du rapport de couple entre deux mobiles.

Cette problématique intéresse particulièrement l'adaptation du niveau du couple délivré par un barillet à un mécanisme d'échappement au travers d'un rouage de finissage: la valeur de ce couple définit l'amplitude de l'oscillateur, et donc influence très fortement ses performances chronométriques.

De façon similaire, le rapport de couple entre une masse oscillante et un barillet est un des paramètres qui caractérise la vitesse d'armage d'un mouvement d'échappement de type détente.

De manière générale, le dimensionnement des systèmes horlogers est un compromis entre une valeur haute de couple élevé lorsque le barillet est armé au maximum, et une valeur basse de couple lorsque le barillet est quasiment désarmé.

On connaît des mécanismes permettant de transmettre un couple constant au rouage de finissage, comme par exemple le dispositif de fusée dont le bras de levier entre la chaîne et la fusée est variable en fonction de l'état d'armage du barillet. Toutefois de tels mécanismes ne sont pas conçus pour une modification du rapport de couple par une opération de réglage.

La demande EP 2 701 013 décrit un dispositif de changement de couple actionnable par l'utilisateur et comprenant un mobile satellite, mais la position radiale des zones de contact n'est pas réglable.

### Résumé de l'invention

La présente invention se propose de rendre un rapport de couple entre deux mobiles directement modifiable par une simple opération de réglage.

A cet effet, l'invention concerne un mécanisme variateur de couple selon la revendication 1.

En résumé, dans une application particulière non limitative illustrée par les figures, l'invention présente un premier mobile, un deuxième mobile non concentrique au premier, et un satellite dont l'axe de rotation est orthogonal aux plans des deux mobiles, et dont le périmètre roule sans glisser sur les plans des deux mobiles. La position de ce satellite est donnée par un porte-satellite qui est lui même en liaison avec le bâti du mouvement, platine ou ponts, par une liaison qui peut être une liaison fixe, une liaison pivot, ou une liaison glissière, et qui permet de modifier la position relative du satellite par rapport au deux mobiles, et donc leur rapport de transmission.

L'invention peut donc être utilisée pour différentes applications, comme réaliser une force constante sans nivellement du couple par le bas, ou pour régler l'amplitude moyenne d'un oscillateur, le rapport d'armage d'un dispositif d'automatique, la valeur du couple transmis à un régulateur de complication, à un mécanisme de sonnerie, ou autre.

La modification du rapport de transmission modifie le couple comme la vitesse de rotation, et le mécanisme selon l'invention peut également permettre de régler la vitesse de mobiles, par exemple pour des applications d'affichage.

L'invention concerne encore un mouvement d'horlogerie comportant au moins un tel mécanisme variateur de couple.

L'invention concerne encore une montre comportant au moins un tel mouvement ou/et au moins un tel mécanisme variateur de couple

### Description sommaire des dessins

D'autres caractéristiques et avantages de l'invention apparaîtront à la lecture de la description détaillée qui va suivre, en référence aux dessins annexés, où :
- la figure 1 est un schéma cinématique illustrant un premier mode de réalisation de l'invention, avec un porte-satellite à bille entre deux pistes portées par deux mobiles, ce porte-satellite étant en liaison pivot autour de l'axe du premier mobile;
- la figure 2 est une vue schématisée, en perspective d'un mécanisme selon ce premier mode de réalisation ;
- la figure 3 est un schéma cinématique, en vue de dessus, de ce même premier mode de réalisation ;
- la figure 4 est une vue de dessus du mécanisme de la figure 2, dans une position de réglage correspondant à un rayon minimal entre une bille, constituant le satellite, et l'axe du deuxième mobile ;
- la figure 5 est une vue similaire à la figure 4, dans une autre position de réglage correspondant à un rayon maximal entre cette bille et l'axe du deuxième mobile ;
- la figure 6 est une vue de côté du mécanisme de la figure 2, montrant la bille pivotée sur un arbre que comporte le porte-satellite ;
- la figure 7 est une vue schématisée, partielle, en perspective, de cette bille pivotée sur un arbre du porte-satellite ;
- la figure 8 est une vue similaire à la figure 7 d'une variante où la bille est enfermée latéralement dans un chambre que comporte le porte-satellite ;
- la figure 9 est un schéma cinématique illustrant un deuxième mode de réalisation de l'invention, avec le porte-satellite commandé par la sortie d'un différentiel dont l'une des entrées est liée à la rotation du premier mobile, et dont l'autre entrée est liée à la rotation d'un troisième mobile, susceptible d'être lié à un moyen de rappel élastique agencé pour entraîner le premier mobile ;
- la figure 10 est une vue de dessus d'un mécanisme selon ce deuxième mode de réalisation à différentiel, où le porte-satellite comporte un secteur denté coopérant avec un pignon de sortie du différentiel, dans une position d'extremum correspondant à un rayon minimal entre cette bille et l'axe du deuxième mobile ;
- la figure 11 est une vue similaire à la figure 10, dans une autre position de réglage correspondant à un rayon maximal entre cette bille et l'axe du deuxième mobile ;
- les figures 12 et 13 sont des schémas cinématiques, en vue de dessus, illustrant un troisième mode de réalisation de l'invention, avec le porte-satellite commandé linéairement, perpendiculairement sur la figure 12, ou parallèlement sur la figure 13, au plan formé par les axes de rotation des deux mobiles ;
- les figures 14 et 15 sont des schémas cinématiques illustrant un quatrième mode de réalisation de l'invention, où le satellite est denté et coopère avec des dentures ou des pistes crantées à rainures concentriques au niveau des deux mobiles ;
- la figure 16 est un schéma de détail d'un mobile de passage constituant une entrée de différentiel en liaison avec le premier mobile, et apte à occuper des positions discrètes ;
- la figure 17 est un schéma-blocs représentant une montre comportant un mouvement d'horlogerie qui comporte lui-même un mécanisme selon l'invention.

### Description détaillée des modes de réalisation préférés

L'invention concerne un mécanisme variateur de couple 10 de réglage de rapport de couple entre une première piste 11 s'étendant autour d'un premier axe de pivotement D1, et une deuxième piste 21 s'étendant autour d'un deuxième axe de pivotement D2.

Plus particulièrement, la première piste 11 s'étend au niveau d'un premier plan P1 perpendiculaire à un premier axe de pivotement D1, et la deuxième piste 21 s'étend au niveau d'un deuxième plan P2 perpendiculaire à un deuxième axe de pivotement D2. On entend par là que la première piste 11, ou/et la deuxième piste 21, peut être constituée par une denture, ou similaire, se développant régulièrement de part et d'autre d'un tel premier plan P1 ou deuxième plan P2.

Dans un cas particulier, la première piste 11 et la deuxième piste 21 sont planes.

La première piste 11 est agencée pour être rapportée ou intégrée à un premier mobile 1 d'horlogerie pivotant autour du premier axe de pivotement D1. Et la deuxième piste 21 est agencée pour être rapportée ou intégrée à un deuxième mobile 2 d'horlogerie pivotant autour du deuxième axe de pivotement D2.

L'invention est illustrée avec une variante intégrée, non limitative, où un premier mobile 1 comporte la première piste 11, et où un deuxième mobile 2 d'horlogerie comporte la deuxième piste 21.

Mais l'invention est aussi applicable à d'autres variantes, notamment avec des pistes annulaires, ou toriques, ou coniques, ou similaires, agencées pour être rapportées sur des mobiles existants, tel que roues, tambours, ou similaires.

Selon l'invention, le mécanisme variateur de couple 10 comporte au moins un mobile intermédiaire 4 de renvoi, formant satellite, coopérant simultanément en relation d'entraînement dans une première zone de contact 41 avec la première piste 11, et dans une deuxième zone de contact 42 avec la deuxième piste 21. Et le mécanisme 10 comporte des moyens de commande 5, qui sont agencés pour régler la position radiale de la première zone de contact 41 par rapport au premier axe de pivotement D1, ou/et pour régler la position radiale de la deuxième zone de contact 42 par rapport au deuxième axe de pivotement D2, de façon à modifier le rapport de couple entre le premier mobile 1 et le deuxième mobile 2.

Dans une variante particulière, les moyens de commande 5 sont agencés pour régler à la fois la position radiale de la première zone de contact 41 par rapport au premier axe de pivotement D1, et pour régler la position radiale de la deuxième zone de contact 42 par rapport au deuxième axe de pivotement D2.

Dans une réalisation particulière illustrée par les figures, le premier axe de pivotement D1 est parallèle au deuxième axe de pivotement D2.

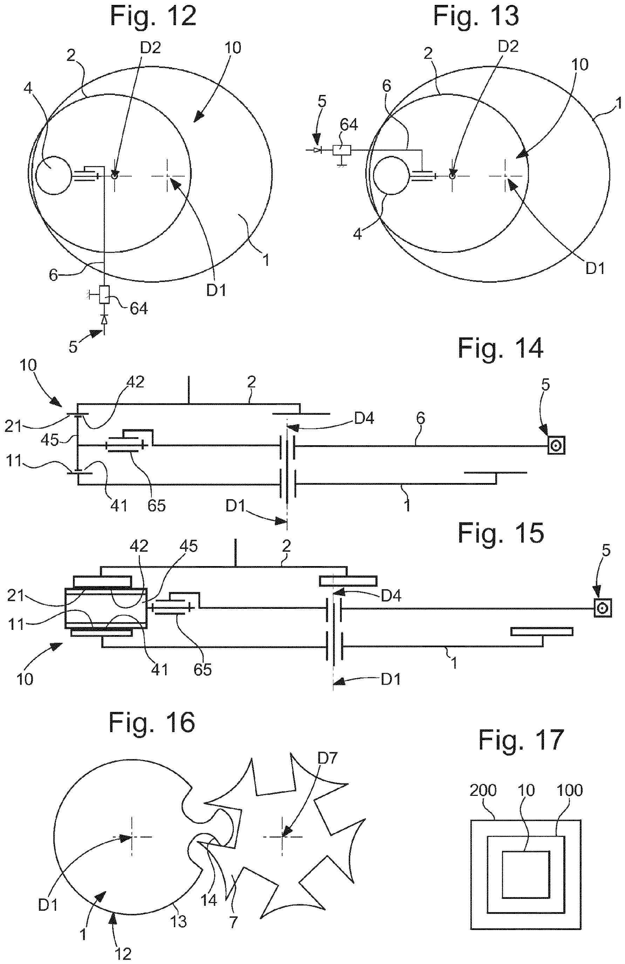

Dans une réalisation particulière, notamment dans une variante illustrée aux figures 12 et 13, les moyens de commande 5 sont agencés pour modifier la position curviligne d'un porte-satellite 6 porteur du mobile intermédiaire 4, le long d'une courbe s'étendant dans le plan bissecteur. On comprend que cette modification de la position curviligne peut concerner aussi bien la position radiale que la position angulaire.

Plus particulièrement, les moyens de commande 5 sont agencés pour modifier la position linéaire du porte-satellite 6 le long d'une droite s'étendant dans le plan bissecteur. Par exemple, un arbre du porte-satellite 6 coulisse linéairement dans un fourreau de guidage 64, tel que visible sur les figures 12 et 13.

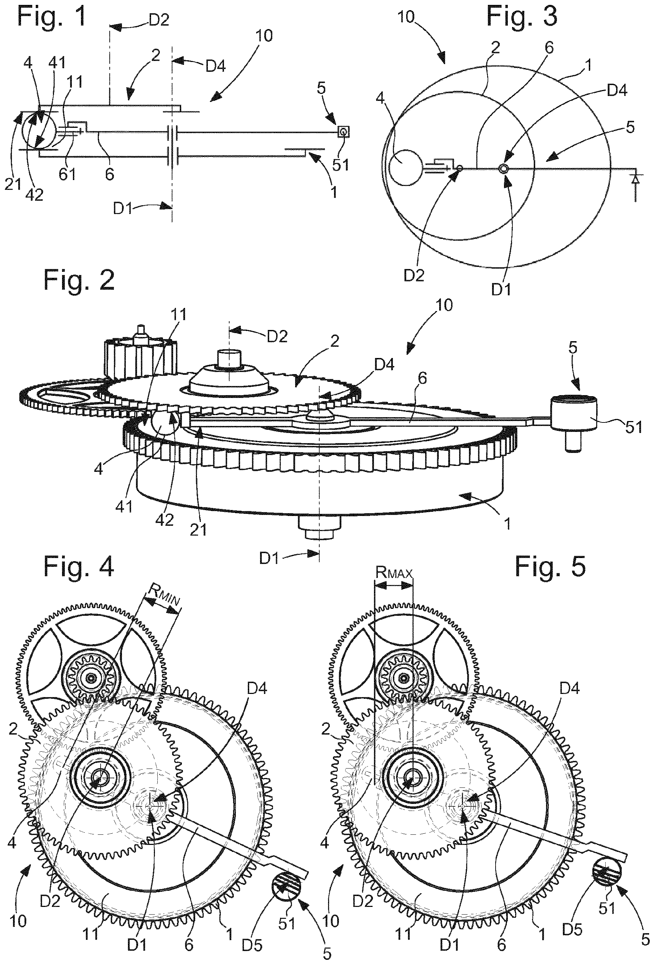

Dans une variante illustrée aux figures 1 à 11 et 14 et 15, les moyens de commande 5 sont agencés pour modifier la position angulaire d'un porte-satellite 6 porteur du mobile intermédiaire 4, par rapport à un axe intermédiaire D4, dans un plan bissecteur du premier plan P1 et du deuxième plan P2.

Plus particulièrement, l'axe intermédiaire D4 est parallèle au premier axe de pivotement D1 et au deuxième axe de pivotement D2 quand ceux-ci sont parallèles.

Plus particulièrement encore, l'axe intermédiaire D4 est confondu avec le premier axe de pivotement D1 ou le deuxième axe de pivotement D2.

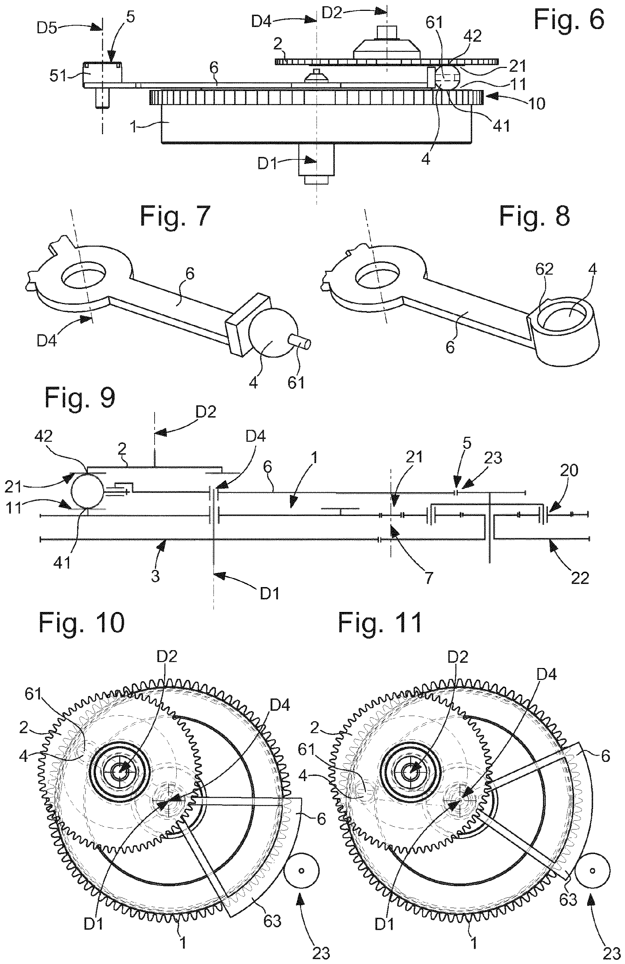

Dans la variante particulière des figures 9 à 11, les moyens de commande 5 sont entraînés par la sortie 23 d'un différentiel 20 dont une première entrée 21 est agencée pour être entraînée par le premier mobile 1, et dont une deuxième entrée 22 est entraînée par un troisième mobile 3 susceptible d'être lié à un moyen de rappel élastique agencé pour entraîner le premier mobile 1, tel qu'un rochet de barillet.

Dans une réalisation particulière de cette variante à différentiel, la première entrée 21 n'est entraînée que temporairement par le premier mobile 1, et occupe des positions discrètes.

En particulier, tel que visible sur la figure 16, le premier mobile 1 comporte, sur une surface périphérique 12, une alternance de contours réguliers 13 tous de même rayon, et de reliefs 14 de rayon ou module différent, et la première entrée 21 est agencée pour être entraînée par sauts par le premier mobile 1, et comporte un mobile de passage 7 qui est agencé pour glisser sur les contours réguliers 13 et pour pivoter lors de la rencontre de ces reliefs 14,. Ce mobile de passage 7 occupe des positions angulaires discrètes, dans lesquelles le mobile de passage 7 est maintenu par sa coopération avec la surface périphérique 12.

Plus particulièrement, ce mobile de passage 7 est un mobile en croix de Malte, du type employé dans les mécanismes de calendrier perpétuel pour déterminer les longueurs des mois des années bissextiles.

Dans une application avantageuse de l'invention, le premier mobile 1 est un tambour de barillet, et le troisième mobile est un rochet d'armage lié à un ressort de barillet agencé pour entraîner le tambour de barillet.

Plus particulièrement, et tel que visible sur les variantes des figures 2 à 6, les moyens de commande 5 comportent une vis de réglage excentrique 51, accessible à un horloger pour un réglage initial ou d'après-vente.

Différentes technologies sont utilisables pour mettre en oeuvre l'invention.

Notamment, sur les réalisations des figures 1 à 13, la première piste 11 et la deuxième piste 21 sont planes, et le mécanisme 10 comporte un porte-satellite 6 commandé en position par les moyens de commande 5 et portant le mobile intermédiaire 4 qui est une bille. Cette bille est, ou bien comme sur la figure 7 pivotée autour d'un premier arbre 61 que comporte le porte-satellite 6 et qui traverse diamétralement la bille, ou bien comme sur la figure 8 libre à jeu minimal dans une chambre 62 sensiblement cylindrique que comporte le porte-satellite 6, et dont elle affleure aux deux extrémités, pour coopérer avec la première piste 11 d'un premier côté, et avec la deuxième piste 21 d'un deuxième côté. D'autres réalisations sont naturellement possibles, avec d'autres formes de mobiles intermédiaires 4, et d'autres formes de guidage.

Dans une autre réalisation visible aux figures 14 et 15, la première piste 11 et la deuxième piste 21 sont dentées, et le mécanisme 10 comporte un porte-satellite 6 commandé en position par les moyens de commande 5 et portant le mobile intermédiaire 4 qui est un pignon denté 45, qui est pivoté autour d'un deuxième arbre ou dans un de fourreau 65 que comporte le porte-satellite 6. Bien sûr, le premier mobile 1 et le deuxième mobile 2 doivent alors eux même être crantés selon des rainures, ou concentriques aux axes de rotation des mobiles, ou volontairement orientées dans une direction pour favoriser l'engrènement avec le satellite 4 dans toute sa plage de fonctionnement.

Quelques modes de réalisation particuliers sont décrits ci-après, ils ne sont pas limitatifs, et peuvent être combinés entre eux.

Un premier mode de réalisation, aux figures 1 à 6, est un variateur simple avec une bille roulant sans glissement, et avec un rapport fixe déterminé lors d'une opération de réglage, par un dispositif de réglage mécanique simple, accessible à l'horloger lors de l'assemblage du mouvement, et encore facilement accessible au technicien d'après-vente, constituant les moyens de commande 5, ici constitués par une vis excentrique. La position angulaire du porte-satellite 6 peut ainsi être modifiée de manière directe par l'intermédiaire d'un excentrique ou d'une vis accessible depuis l'extérieur de la tête de montre par exemple.

Ce premier mode est illustré sur les figures 2 à 6 avec le premier mobile 1 constitué par un tambour de barillet, sur lequel le couple n'est pas constant en fonction de la position angulaire du tambour, et le deuxième mobile 2 constitué par un mobile du rouage de finissage, ou bien par un mobile du dispositif d'automatique. Dans les deux cas, l'utilisateur, ou plutôt l'horloger, peut régler, au moyen d'un moyen de réglage manuel ou d'un mécanisme, le rapport de transmission, et donc le couple moyen appliqué sur ce deuxième mobile, ce qui permet d'ajuster l'amplitude, ou respectivement les propriétés de remontage automatique.

La figure 4 illustre une position de réglage correspondant à un rayon minimal Rmin entre la bille 4, constituant le satellite, et le deuxième axe D2 du deuxième mobile 2, ce qui correspond à un rapport de réduction maximum, notamment à un armage maximum de barillet. Et la figure 5 illustre une autre position de réglage correspondant à un rayon maximal RMAX entre cette bille 4 et ce deuxième axe D2, ce qui correspond à un rapport de réduction minimum, quand le barillet est désarmé. Sur cette réalisation, la bille 4 est montée en pivot sur un arbre 61 porté par le porte-satellite 6.

Un deuxième mode de réalisation 2 est illustré aux figures 9 à 11, sous forme d'un variateur avec une bille 4 avec roulement sans glissement, et un rapport variable piloté par un différentiel 20. Les figures 10 et 11 montrent l'engrènement entre le porte-satellite 6 et la sortie 23 du différentiel.

Dans ce deuxième mode de réalisation, la position du porte-satellite 6, qui est aussi représenté ici avec un axe de pivotement D4 confondu avec le premier axe de pivotement D1 du premier mobile 1, est directement contrôlée via un différentiel 20 dont la sortie 23, reliée au porte satellite 6, dépend de l'état d'armage d'un barillet dont le tambour constitue le premier mobile 1. La figure 9 illustre le principe cinématique de ce deuxième mode de réalisation et les figures 10 et 11 un exemple de construction non limitatif.

Ainsi la première entrée 21 du différentiel 20 est liée à la rotation du tambour de barillet, tandis que la seconde entrée 22 du différentiel 20 est reliée directement à un rochet 3 de barillet, par lequel s'effectue l'armage de celui-ci, manuel ou automatique avec un mécanisme à masse oscillante. On connaît l'utilisation d'un tel différentiel 20 pour afficher la réserve de marche d'un mouvement, ou encore pour effectuer certains affichages sur une masse oscillante. Le différentiel 20 est également utile, dans ce deuxième mode de réalisation, pour faire varier le rapport de transmission entre le barillet et un deuxième mobile 2, rouage de finissage ou rouage d'automatique par exemple, pour lui transmettre un couple constant quel que soit son état d'armage.

Cette solution nécessite de relier temporairement la première entrée 21 du différentiel au tambour de barillet 1, car, si ces deux mobiles étaient reliés simplement par un engrenage, alors le barillet se désarmerait instantanément en faisant tourner le porte-satellite 6 dans sa position extrême.

Pour éviter cette configuration, et pour modifier de manière alternée la position du porte-satellite 6 sans affecter le désarmage du barillet le reste du temps, on utilise un mobile de passage 7, tel que décrit plus haut, la figure 16 illustre le principe d'un système de type croix de Malte, même si celui-ci génère des frottements mécaniques importants entre la première entrée 21 du différentiel 20 et le tambour 1. De préférence, on met en oeuvre un mobile de passage 7 roulant, consommant moins d'énergie, pour minimiser les frottements mécaniques entre le tambour de barillet 1 (roue entraîneuse) et la première entrée du différentiel (roue de passage) lorsque cette dernière est au repos. Dans une particulière, la première entrée du différentiel est entraînée une fois par tour du tambour de barillet 1, ce qui, à chaque passage, modifie la position du porte-satellite 6, et donc modifie le rapport de couple entre le tambour de barillet 1 et le deuxième mobile 2, qui est ici le premier mobile du rouage de finissage.

Les figures 12 et 13 illustrent un troisième mode de réalisation, avec un variateur avec une bille roulant sans glissement, guidée par un porte-satellite 6 en translation. Dans ce troisième mode de réalisation, le porte-satellite 6 est en translation par rapport au mouvement de base (liaison glissière) plutôt qu'en rotation (liaison pivot). Les figures 12 et 13 illustrent le principe cinématique de ce troisième mode de réalisation. La translation du satellite 4 peut être réalisée suivant plusieurs axes, selon l'encombrement du mouvement et l'efficacité (rendement) de la transmission. Par exemple, cette translation peut être réalisée de manière parallèle au plan passant par les axes de rotation D1 et D2 des deux mobiles 1 et 2. La position en translation du porte-satellite 6 peut être modifiée par un dispositif de réglage tel qu'un excentrique ou une vis accessible depuis l'extérieur de la tête de montre, tel qu'illustré dans les autres variantes.

L'invention concerne encore un mouvement d'horlogerie 100 comportant au moins un tel mécanisme variateur de couple 10 dont la première piste 11 et la deuxième piste 21 sont solidaires respectivement d'un premier mobile 1 et d'un deuxième mobile 2,que comporte ce mouvement 100.

L'invention concerne encore une montre 200 comportant au moins un tel mouvement ou/et au moins un tel mécanisme variateur de couple 10.

L'invention permet d'adapter le rapport de réduction entre deux mobiles pour plusieurs type d'applications, parmi lesquelles sont cités ci-après quelques exemples non limitatifs.

Une première application concerne le réglage de l'amplitude: en modifiant le rapport de couple en amont d'un rouage d'affichage (aiguille), les systèmes proposés permettent à l'horloger de régler son amplitude, et également la réserve de marche puisque les deux paramètres sont liés, et de l'adapter aux performances de son mouvement. Ce réglage est réalisé via un excentrique ou une vis de réglage, un levier, ou similaire, de préférence accessible depuis l'extérieur de la montre.

Une deuxième application concerne le réglage de la vitesse d'armage : en modifiant le rapport de couple entre la masse oscillante et le rochet de barillet, les systèmes proposés permettent d'agir sur un des paramètres qui définit la vitesse d'armage du mouvement.

Une troisième application concerne l'obtention d'une force constante: en utilisant un mécanisme de différentiel relié (par un système de roue de passage ou de croix de Malte) au tambour de barillet et au rochet, le variateur de couple permet d'adapter le rapport de réduction du rouage de finissage (en amont des mécanismes d'affichage) à l'état d'armage du barillet. Le couple en sortie du deuxième mobile est globalement constant, ce qui permet à l'oscillateur de bénéficier d'un apport d'énergie constant sur toute la réserve de marche du mouvement. Contrairement à d'autres systèmes à force constante, cette invention a l'avantage de ne pas dissiper le surplus d'énergie disponible au barillet, contrairement au nivellement par le bas connu de l'art antérieur.

Une quatrième application concerne le réglage de la vitesse d'un rouage de régulation de sonnerie ou de complication. En effet, dans de nombreuses complications horlogères, les mécanismes sont rythmés par un régulateur via un rouage de régulateur. Le rapport de multiplication de ce rouage de régulateur définit la vitesse du régulateur et le couple de frein du mécanisme. En adaptant le rapport de réduction d'un tel rouage, la présente invention permet de régler la vitesse du mécanisme de complication : durée de sonnerie, durée de l'animation du mécanisme, ou similaire.

Dans le cas où le premier mobile 1 et le deuxième mobile 2 pivotent autour d'axes non parallèles dans l'espace, ou encore coplanaires mais sécants, l'invention procure, surtout dans la variante à bille, un bon moyen de transmission d'énergie, tant que les conditions de roulement sont assurées.

De façon générale, pour faciliter le roulement, un revêtement de friction peut être appliqué sur la première piste 11, la deuxième piste 21, ou encore le mobile intermédiaire 4.

L'invention est facilement applicable à :
- tout mouvement de base ;
- des mouvements horlogers à spécifications chronométriques serrées;
- des mécanismes de complication et régulateurs.

## Revendications

1. Mécanisme variateur de couple (10) pour le réglage de rapport de couple entre une première piste (11) s'étendant autour d'un premier axe de pivotement (D1), et une deuxième piste (21) s'étendant autour d'un deuxième axe de pivotement (D2), ladite première piste (11) étant agencée pour être rapportée ou intégrée à un premier mobile (1) d'horlogerie pivotant autour dudit premier axe de pivotement (D1), et ladite deuxième piste (21) étant agencée pour être rapportée ou intégrée à un deuxième mobile (2) d'horlogerie pivotant autour dudit deuxième axe de pivotement (D2), **caractérisé en ce que** ledit mécanisme (10) comporte au moins un mobile intermédiaire (4) de renvoi formant satellite coopérant simultanément en relation d'entraînement dans une première zone de contact (41) avec ladite première piste (11) et dans une deuxième zone de contact (42) avec ladite deuxième piste (21), et **en ce que** ledit mécanisme (10) comporte des moyens de commande (5) agencés pour régler la position radiale de ladite première zone de contact (41) par rapport audit premier axe de pivotement (D1) ou/et pour régler la position radiale de ladite deuxième zone de contact (42) par rapport audit deuxième axe de pivotement (D2), de façon à modifier le rapport de couple entre ledit premier mobile (1) et ledit deuxième mobile (2).

2. Mécanisme variateur de couple (10) selon la revendication 1, **caractérisé en ce que** lesdits moyens de commande (5) sont agencés pour régler à la fois la position radiale de ladite première zone de contact (41) par rapport audit premier axe de pivotement (D1) et pour régler la position radiale de ladite deuxième zone de contact (42) par rapport audit deuxième axe de pivotement (D2).

3. Mécanisme variateur de couple (10) selon la revendication 1 ou 2, **caractérisé en ce que** ledit premier axe de pivotement (D1) est parallèle audit deuxième axe de pivotement (D2).

4. Mécanisme variateur de couple (10) selon l'une des revendications 1 à 3, **caractérisé en ce que** lesdits moyens de commande (5) sont agencés pour modifier la position curviligne d'un porte-satellite (6) porteur dudit mobile intermédiaire (4), le long d'une courbe s'étendant dans ledit plan bissecteur.

5. Mécanisme variateur de couple (10) selon la revendication 4, **caractérisé en ce que** lesdits moyens de commande (5) sont agencés pour modifier la position linéaire dudit porte-satellite (6) le long d'une droite s'étendant dans ledit plan bissecteur.

6. Mécanisme variateur de couple (10) selon la revendication 4, **caractérisé en ce que** lesdits moyens de commande (5) sont agencés pour modifier la position angulaire d'un porte-satellite (6) porteur dudit mobile intermédiaire (4), par rapport à un axe intermédiaire (D4), dans un plan bissecteur dudit premier plan (P1) et dudit deuxième plan (P2).

7. Mécanisme variateur de couple (10) selon les revendications 3 et 6, **caractérisé en ce que** ledit axe intermédiaire (D4) est parallèle audit premier axe de pivotement (D1) et audit deuxième axe de pivotement (D2).

8. Mécanisme variateur de couple (10) selon l'une des revendications 1 à 7, **caractérisé en ce que** lesdits moyens de commande (5) sont entraînés par une sortie (23) d'un différentiel (20) dont une première entrée (21) est agencée pour être entraînée par ledit premier mobile (1), et dont une deuxième entrée (22) est entraînée par un troisième mobile (3) lié à un moyen de rappel élastique agencé pour entraîner ledit premier mobile (1).

9. Mécanisme variateur de couple (10) selon la revendication 8, **caractérisé en ce que** ladite première entrée (21) n'est entraînée que temporairement par ledit premier mobile (1), et occupe des positions discrètes.

10. Mécanisme variateur de couple (10) selon la revendication 9, **caractérisé en ce que** ledit premier mobile (1) comporte, sur une surface périphérique (12), une alternance de contours réguliers (13) tous de même rayon, et de reliefs (14) de rayon ou module différent, et **en ce que** ladite première entrée (21) est agencée pour être entraînée par sauts par ledit premier mobile (1), et comporte un mobile de passage (7) qui est agencé pour glisser sur lesdits contours réguliers (13) et pour pivoter lors de la rencontre desdits reliefs (14), et qui occupe des positions angulaires discrètes dans lesquelles ledit mobile de passage (7) est maintenu par sa coopération avec ladite surface périphérique.

11. Mécanisme variateur de couple (10) selon la revendication 10, **caractérisé en ce que** ledit mobile de passage (7) est un mobile en croix de Malte.

12. Mécanisme variateur de couple (10) selon l'une des revendications 8 à 11, **caractérisé en ce que** ladite première piste (11) est associée à un dit premier mobile (1) qui est un tambour de barillet, et **en ce que** ledit troisième mobile est un rochet d'armage lié à un ressort de barillet agencé pour entraîner ledit tambour de barillet.

13. Mécanisme variateur de couple (10) selon l'une des revendications 1 à 7, **caractérisé en ce que** lesdits moyens de commande (5) comportent une vis de réglage excentrique (51) accessible à un horloger pour un réglage initial ou d'après-vente.

14. Mécanisme variateur de couple (10) selon l'une des revendications 1 à 13, **caractérisé en ce que** ladite première piste (11) et ladite deuxième piste (21) sont planes, et **en ce que** ledit mécanisme (10) comporte un porte-satellite (6) commandé en position par lesdits moyens de commande (5) et portant ledit mobile intermédiaire (4) qui est une bille, qui est, ou bien pivotée autour d'un premier arbre (61) que comporte ledit porte-satellite (6) et qui traverse diamétralement ladite bille, ou bien libre dans une chambre (62) que comporte ledit porte-satellite (6).

15. Mécanisme variateur de couple (10) selon l'une des revendications 1 à 13, **caractérisé en ce que** ladite première piste (11) et ladite deuxième piste (21) sont dentées, et **en ce que** ledit mécanisme (10) comporte un porte-satellite (6) commandé en position par lesdits moyens de commande (5) et portant ledit mobile intermédiaire (4) qui est un pignon denté qui est pivoté autour d'un deuxième arbre ou dans un fourreau (65) dans que comporte ledit porte-satellite (6).

16. Mouvement d'horlogerie (100) comportant au moins un mécanisme variateur de couple (10) selon l'une des revendications 1 à 14, **caractérisée en ce que** ladite première piste (11) et ladite deuxième piste (21) sont solidaires respectivement d'un premier mobile (1) et d'un deuxième mobile (2) que comporte ledit mouvement (100).

17. Montre (200) comportant au moins un mécanisme variateur de couple (10) selon l'une des revendications 1 à 14.

## Patentansprüche

1. Drehmomentwandlermechanismus (10) für die Regulierung des Drehmomentverhältnisses zwischen einer um eine erste Schwenkachse (D1) verlaufenden ersten Bahn (11) und einer um eine zweite Schwenkachse (D2) verlaufenden zweiten Bahn (21), wobei die erste Bahn (11) so angeordnet ist, dass sie an ein erstes Uhrendrehteil (1), das um die erste Schwenkachse (D1) schwenkt, angefügt ist oder darin aufgenommen ist, und wobei die zweite Bahn (21) so angeordnet ist, dass sie an ein zweites Uhrendrehteil (2), das um die zweite Schwenkachse (D2) schwenkt, angefügt ist oder darin aufgenommen ist, **dadurch gekennzeichnet, dass** der Mechanismus (10) mindestens ein Umlenkzwischendrehteil (4) umfasst, das einen Satelliten bildet, der gleichzeitig in einer Antriebsbeziehung in einer ersten Kontaktzone (41) mit der ersten Bahn (11) und in einer zweiten Kontaktzone (42) mit der zweiten Bahn (21) zusammenwirkt, und dass der Mechanismus (10) Steuermittel (5) umfasst, ausgelegt, die radiale Position der ersten Kontaktzone (41) in Bezug auf die erste Schwenkachse (D1) einzustellen oder/und die radiale Position der zweiten Kontaktzone (42) in Bezug auf die zweite Schwenkachse (D2) einzustellen, um das Drehmomentverhältnis zwischen dem ersten Drehteil (1) und dem zweiten Drehteil (2) zu verändern.

2. Drehmomentwandlermechanismus (10) nach Anspruch 1, **dadurch gekennzeichnet, dass** die Steuermittel (5) ausgelegt sind, gleichzeitig die radiale Position der ersten Kontaktzone (41) in Bezug auf die erste Schwenkachse (D1) und die radiale Position der zweiten Kontaktzone (42) in Bezug auf die zweite Schwenkachse (D2) einzustellen.

3. Drehmomentwandlermechanismus (10) nach Anspruch 1 oder 2, **dadurch gekennzeichnet, dass** die erste Schwenkachse (D1) zu der zweiten Schwenkachse (D2) parallel ist.

4. Drehmomentwandlermechanismus (10) nach einem der Ansprüche 1 bis 3, **dadurch gekennzeichnet, dass** die Steuermittel (5) ausgelegt sind, die krummlinige Position eines Satellitenträgers (6) zu verändern, der das Zwischendrehteil (4) längs einer in der Halbierungsebene verlaufenden Kurve trägt.

5. Drehmomentwandlermechanismus (10) nach Anspruch 4, **dadurch gekennzeichnet, dass** die Steuermittel (5) ausgelegt sind, die lineare Position des Satellitenträgers (6) längs einer in der Halbierungsebene verlaufenden Geraden, zu verändern.

6. Drehmomentwandlermechanismus (10) nach Anspruch 4, **dadurch gekennzeichnet, dass** die Steuermittel (5) ausgelegt sind, die Winkelposition eines das Zwischendrehteil (4) tragenden Satellitenträgers (6) in Bezug auf eine Zwischenachse (D4) in einer Halbierungsebene der ersten Ebene (P1) und der zweiten Ebene (P2) zu verändern.

7. Drehmomentwandlermechanismus (10) nach den Ansprüchen 3 und 6, **dadurch gekennzeichnet, dass** die Zwischenachse (D4) zu der ersten Schwenkachse (D1) und zu der zweiten Schwenkachse (D2) parallel ist.

8. Drehmomentwandlermechanismus (10) nach einem der Ansprüche 1 bis 7, **dadurch gekennzeichnet, dass** die Steuermittel (5) durch einen Ausgang (23) eines Differentials (20) angetrieben werden, von dem ein erster Eingang (21) dafür ausgelegt ist, durch das erste Drehteil (1) angetrieben zu werden, und von dem ein zweiter Eingang (22) durch ein drittes Drehteil (3) angetrieben wird, das mit einem elastischen Rückstellmittel für den Antrieb des ersten Drehteils (1) verbunden ist.

9. Drehmomentwandlermechanismus (10) nach Anspruch 8, **dadurch gekennzeichnet, dass** der erste Eingang (21) nur vorübergehend durch das erste Drehteil (1) angetrieben wird und diskrete Positionen einnimmt.

10. Drehmomentwandlermechanismus (10) nach Anspruch 9, **dadurch gekennzeichnet, dass** das erste Drehteil (1) auf einer Umfangsoberfläche (12) abwechselnd gleichmäßige Umrisse (13) mit jeweils gleichem Radius und Reliefs (14) mit unterschiedlichem Radius oder Betrag umfasst und dass der erste Eingang (21) ausgelegt ist, durch Sprünge des ersten Drehteils (1) angetrieben zu werden, und ein Durchgangsdrehteil (7) umfasst, das dafür ausgelegt ist, auf den gleichmäßigen Umrissen (13) zu gleiten und bei einem Auftreffen auf die Reliefs (14) zu schwenken, und das diskrete Winkelpositionen einnimmt, in denen das Durchgangsdrehteil (7) durch sein Zusammenwirken mit der Umfangsoberfläche gehalten wird.

11. Drehmomentwandlermechanismus (10) nach Anspruch 10, **dadurch gekennzeichnet, dass** das Durchgangsdrehteil (7) ein Malteserkreuz-Drehteil ist.

12. Drehmomentwandlermechanismus (10) nach einem der Ansprüche 8 bis 11, **dadurch gekennzeichnet, dass** die erste Bahn (11) einem ersten Drehteil (1) zugeordnet ist, das eine Federhaustrommel ist, und dass das dritte Drehteil ein Spannrad ist, das mit einer Federhausfeder zum Antreiben der Federhaustrommel verbunden ist.

13. Drehmomentwandlermechanismus (10) nach einem der Ansprüche 1 bis 7, **dadurch gekennzeichnet, dass** die Steuermittel (5) eine für einen Uhrmacher zur Anfangseinstellung oder Einstellung nach dem Verkauf zugängliche exzentrische Regulierungsschraube umfassen.

14. Drehmomentwandlermechanismus (10) nach einem der Ansprüche 1 bis 13, **dadurch gekennzeichnet, dass** die erste Bahn (11) und die zweite Bahn (21) eben sind und dass der Mechanismus (10) einen Satellitenträger (6) umfasst, dessen Position durch die Steuermittel (5) gesteuert wird und der das Zwischendrehteil (4) trägt, das eine Kugel ist, die entweder um eine erste Welle (61) geschwenkt wird, die der Satellitenträger (6) aufweist und die die Kugel diametral durchquert, oder in einer Kammer (62), die der Satellitenträger (6) aufweist, frei beweglich ist.

15. Drehmomentwandlermechanismus (10) nach einem der Ansprüche 1 bis 13, **dadurch gekennzeichnet, dass** die erste Bahn (11) und die zweite Bahn (21) gezahnt sind und dass der Mechanismus (10) einen Satellitenträger (6) umfasst, dessen Position durch die Steuermittel (5) gesteuert wird und der das Zwischendrehteil (4) trägt, das ein gezahntes Ritzel ist, das um eine zweite Welle geschwenkt wird oder in einer Hülse (65), die der Satellitenträger (6) aufweist.

16. Uhrwerk (100), umfassend mindestens einen Drehmomentwandlermechanismus (10) nach einem der Ansprüche 1 bis 14, **dadurch gekennzeichnet, dass** die erste Bahn (11) und die zweite Bahn (21) mit einem ersten Drehteil (1) bzw. mit einem zweiten Drehteil (2), die das Uhrwerk (100) umfasst, fest verbunden sind.

17. Uhr (200), umfassend mindestens einen Drehmomentwandlermechanismus (10) nach einem der Ansprüche 1 bis 14.

## Claims

1. Torque variator mechanism (10) for regulating the torque ratio between a first path (11) extending about a first pivot axis (D1), and a second path (21) extending about a second pivot axis (D2), said first path (11) being arranged to be added to or incorporated in a first timepiece wheel set (11) pivoting about said first pivot axis (D1), and said second path (21) being arranged to be added to or incorporated in a second timepiece wheel set (2) pivoting about said second pivot axis (D2), **characterized in that** said mechanism (10) comprises at least one intermediate wheel set (4) forming a planetary wheel simultaneously cooperating in a driving relation in a first contact area (41) with said first path (11) and in a second contact area (42) with said second path (21), and **in that** said mechanism (10) also comprises control means (5) arranged to adjust the radial position of said first contact area (41) with respect to said first pivot axis (D1), or/and to adjust the radial position of said second contact area (42) with respect to said second pivot axis (D2), so as to modify the torque ratio between said first wheel set (1) and said second wheel set (2).

2. Torque variator mechanism (10) according to claim 1, **characterized in that** said control means (5) are arranged both to adjust the radial position of said first contact area (41) with respect to said first pivot axis (D1) and to adjust the radial position of said second contact area (42) with respect to said second pivot axis (D2).

3. Torque variator mechanism (10) according to claim 1 or 2, **characterized in that** said first pivot axis (D1) is parallel to said second pivot axis (D2).

4. Torque variator mechanism (10) according to any of claims 1 to 3, **characterized in that** said control means (5) are arranged to modify the curvilinear position of a planetary wheel carrier (6) carrying said intermediate wheel set (4), along a curve extending in the bisector plane.

5. Torque variator mechanism (10) according to claim 4, **characterized in that** said control means (5) are arranged to modify the curvilinear position of said planetary wheel carrier (6) along a straight line extending in the bisector plane.

6. Torque variator mechanism (10) according to claim 4, **characterized in that** said control means (5) are arranged to modify the angular position of a planetary wheel carrier (6) carrying said intermediate wheel set (4), with respect to an intermediate axis (D4), in a bisector plane of said first plane (P1) and of said second plane (P2).

7. Torque variator mechanism (10) according to claims 3 and 6, **characterized in that** said intermediate pivot axis (D4) is parallel to said first pivot axis (D1) and to said second pivot axis (D2).

8. Torque variator mechanism (10) according to any of claims 1 to 7, **characterized in that** said control means (5) are driven by an output (23) of a differential (20), a first input (21) of which is arranged to be driven by said first wheel set (1), and a second input (22) of which is driven by a third wheel set (3) connected to an elastic return means arranged for driving said first wheel set (1).

9. Torque variator mechanism (10) according to claim 8, **characterized in that** said first input (21) is only temporarily driven by said first wheel set (1) and occupies discrete positions.

10. Torque variator mechanism (10) according to claim 9, **characterized in that** said first wheel set (1) comprises, on a peripheral surface (12), alternating regular contours (13) all of the same radius, and relief portions (14) of different radius or module, and **in that** said first input (21) is arranged to be driven in jumps by said first wheel set (1), and comprises a passing wheel set (7) which is arranged to slide over said regular contours (13) and to pivot on encountering said relief portions (14), and which occupies discrete angular positions in which said passing wheel set (7) is held by the cooperation thereof with said peripheral surface.

11. Torque variator mechanism (10) according to claim 10, **characterized in that** said passing wheel set (7) is a Maltese cross shaped wheel set.

12. Torque variator mechanism (10) according to any of claims 8 to 11, **characterized in that** said first path (11) is associated with a said first wheel set (1) which is a barrel drum, and **in that** said third wheel set is a winding ratchet connected to a mainspring arranged for driving said barrel drum.

13. Torque variator mechanism (10) according to any of claims 1 to 7, **characterized in that** said control means (5) comprise an eccentric adjustment screw (51), accessible to a watchmaker for an initial or after sales adjustment.

14. Torque variator mechanism (10) according to any of claims 1 to 13, **characterized in that** said first path (11) and said second path (21) are planar, and **in that** said mechanism (10) comprises a planetary wheel carrier (6) controlled in position by said control means (5) and carrying said intermediate wheel set (4) which is a ball, which is either pivoted about a first arbor (61) comprised in said planetary wheel carrier (6) and which passes diametrically through said ball, or free inside a chamber (62) comprised in said planetary wheel carrier (6).

15. Torque variator mechanism (10) according to any of claims 1 to 13, **characterized in that** said first path (11) and said second path (21) are toothed, and **in that** said mechanism (10) comprises a planetary wheel carrier (6) controlled in position by said control means (5) and carrying said intermediate wheel set (4) which is a toothed pinion which is pivoted about a second arbor or in a sleeve (65) comprised in said planetary wheel carrier (6).

16. Timepiece movement (100) comprising at least one torque variator mechanism (10) according to any of claims 1 to 14, **characterized in that** said first path (11) and said second path (21) are respectively integral with a first wheel set (1) and a second wheel set (2) comprised in said movement (100).

17. Watch (200) including at least one torque variator mechanism (10) according to any of claims 1 to 14.
